# EUROPEAN PATENT APPLICATION

(11) **EP 3 135 978 A1**
(43) Date of publication of application: **01.03.2017**
(21) Application number: 16182470.1
(22) Date of filing: 02.08.2016
(51) Int. Cl.: F16L 37/56, F16L 39/00

(54) **PIPE-IN-PIPE FAST INSTALLATION STRUCTURE**

(30) Priority: 27.08.2015 CN 201520652917 U
(71) Applicant: Xiamen Runner Industrial Corporation, Xiamen 361021 (CN)
(72) Inventor: LIU, Mei Pu, Jimei, Xiamen 361021 (CN); WANG, Jin Fa, Jimei, Xiamen 361021 (CN)
(74) Representative: Cabinet Chaillot

(57) **Abstract**

A pipe-in-pipe fast installation structure comprises: an outer pipe (100); a pliable inner pipe (200), disposed in the outer pipe (100); a connector (300), connected to the outer pipe (100); and a C ring (310), formed integrally with an end of the connector (300), wherein, the pliable inner pipe (200) penetrates through the outer pipe (100) to extend out from the connector (300), while an end of the pliable inner pipe (200) is fastened into the C ring (310).

## Description

### BACKGROUND OF THE INVENTION

### Field of the Invention

The present invention relates to a fast installation structure, and in particular to a pipe-in-pipe fast installation structure.

### The Prior Arts

Presently, the pipe connection and installation structure has the shortcomings of having a complicated structure and requiring quite a lot of accessories. As such, its production cost is high, while its installation is laborious and slow, thus its production efficiency is low.

Therefore, presently, the design and performance of pipe connection and installation structure is not quite satisfactory, and it leaves much room for improvement.

### SUMMARY OF THE INVENTION

In view of the problems and drawbacks of the prior art, the present invention provides a pipe-in-pipe fast installation structure, that is simple in structure, low in production cost, convenient to install, and secure in connection.

The present invention provides a pipe-in-pipe fast installation structure, comprising: an outer pipe, a pliable inner pipe, a connector, and a C ring. The pliable inner pipe is disposed in the outer pipe. The connector is connected to the outer pipe. The C ring is formed integrally with an end of the connector. The pliable inner pipe penetrates through the outer pipe to extend out from the connector, while an end of the pliable inner pipe is fastened into the C ring.

In an aspect of the present invention, the pipe-in-pipe fast installation structure further includes a pliable tube connector, through which the connector 300 is connected to the outer pipe.

In another aspect of the present invention, the pipe-in-pipe fast installation structure further includes: a positioning ring, disposed around the pliable tube connector, to act in cooperation with an end face of the outer pipe. One end of the pliable tube connector is connected to the outer pipe through riveting, while its other end is connected to the connector through threading.

In yet another aspect of the present invention, the pipe-in-pipe fast installation structure further includes: a movable connection sleeve, sleeved around an end of the outer pipe; and a blocking ring, disposed around the connector, to prevent the movable connection sleeve from detaching from the outer pipe.

In a further aspect of the present invention, the pipe-in-pipe fast installation structure further includes: a first tight seal ring slot, disposed on the pliable tube connector; and a first tight seal ring, disposed in the first tight seal ring slot, to form tight seal contact with the connector.

In another aspect of the present invention, the pipe-in-pipe fast installation structure further includes: a second tight seal ring slot, disposed on the connector; and a second tight seal ring, disposed in the second tight seal ring slot, to tightly seal an outer interface for a water channel main body of a pull out head.

In another aspect of the present invention, the pipe-in-pipe fast installation structure further includes: at least a tight seal protrusion ring portion, disposed at an end of the pliable inner pipe, to tightly seal an inner interface for the water channel main body of the pull out head.

Compared with the existing technology, the pipe-in-pipe fast installation structure has the following advantages in that, the C ring for fixing the pliable inner pipe is formed integrally with the connector. As such, the pliable inner pipe can be fastened into the C ring of the connector by making use of the radial compressibility of the pliable inner pipe. In such a structure, the inner pipe and the outer pipe are fixed together through using a special design connector. Therefore, the present invention is simple in structure, low in production cost, fast in installation, hereby achieving raised production efficiency, and solid and secure installation.

Further scope of the applicability of the present invention will become apparent from the detailed descriptions given hereinafter. However, it should be understood that the detailed descriptions and specific examples, while indicating preferred embodiments of the present invention, are given by way of illustration only, since various changes and modifications within the spirit and scope of the present invention will become apparent to those skilled in the art from the detailed descriptions.

### BRIEF DESCRIPTION OF THE DRAWINGS

The related drawings in connection with the detailed descriptions of the present invention to be made later are described briefly as follows, in which:
Fig. 1 is a schematic diagram of a pipe-in-pipe fast installation structure according to an embodiment of the present invention;
Fig. 2 is a cross section view of a pipe-in-pipe fast installation structure according to an embodiment of the present invention;
Fig. 3 is a schematic diagram of a connector according to an embodiment of the present invention; and
Fig. 4 is a schematic diagram of a water input end of a pull out head according to an embodiment of the present invention.

### DETAILED DESCRIPTION OF THE PREFERRED EMBODIMENT

The purpose, construction, features, functions and advantages of the present invention can be appreciated and understood more thoroughly through the following detailed descriptions with reference to the attached drawings.

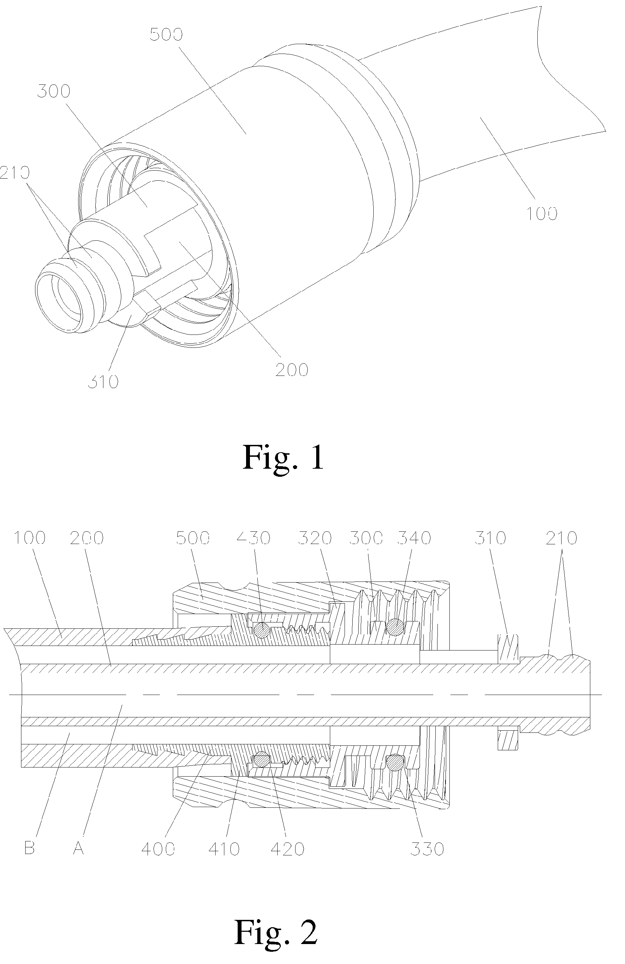

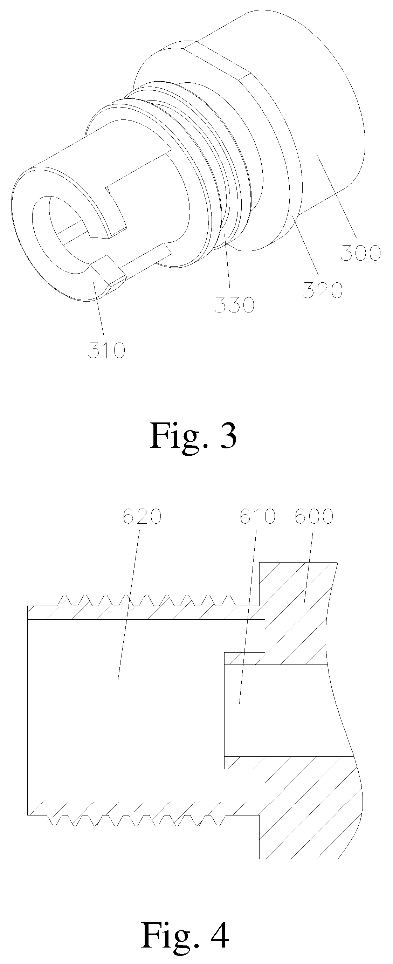

Refer to Figs. 1 to 4 respectively for a schematic diagram of a pipe-in-pipe fast installation structure according to an embodiment of the present invention;
a cross section view of a pipe-in-pipe fast installation structure according to an embodiment of the present invention; a schematic diagram of a connector according to an embodiment of the present invention; and a schematic diagram of a water input end of a pull out head according to an embodiment of the present invention.

As shown in Figs. 1 to 4, the present invention provides a pipe-in-pipe fast installation structure, comprising: an outer pipe 100, a pliable inner pipe 200, a connector 300, and a C ring 31. The pliable inner pipe 200 is disposed in the outer pipe 100. The connector 300 is connected to the outer pipe 100. The C ring 310 is formed integrally with an end of the connector 300. The pliable inner pipe 100 penetrates through the outer pipe 100 to extend out from the connector 300, while an end of the pliable inner pipe 200 is fastened into the C ring 310. A first channel A is formed in a chamber of the pliable inner pipe 200; while a second channel B is formed between an outer wall of the pliable inner pipe 200 and an inner wall of the outer pipe 100.

In an embodiment of the present invention, the pipe-in-pipe fast installation structure further includes a pliable tube connector 400, through which the connector 300 is connected to the outer pipe 100. Therefore, there is no need to add other accessories for fixing.

In an embodiment of the present invention, the pipe-in-pipe fast installation structure further includes: a positioning ring 410, disposed around the pliable tube connector 400, to act in cooperation with an end face of the outer pipe 100. One end of the pliable tube connector 400 is inserted into and connected to the outer pipe 100 through riveting, while its other end having outer threads, is connected to and act in cooperation with the connector 300 having inner threads.

In an embodiment of the present invention, the pipe-in-pipe fast installation structure further includes: a first tight seal ring slot 420, disposed on the pliable tube connector 400; and a first tight seal ring 430, disposed in the first tight seal ring slot 420, to form tight seal contact with the connector 300.

In an embodiment of the present invention, the pipe-in-pipe fast installation structure further includes: a movable connection sleeve 500, sleeved around an end of the outer pipe 100; and a blocking ring 320, disposed around an outer perimeter of the connector 300, to prevent the movable connection sleeve 500 from detaching from the outer pipe 100. An end of the movable connection sleeve 500 is provided with inner threads, to act in cooperation with the outer threads for the water input end of the pull out head. The outer threads for the water input end of the pull out head are just the outer threads for the water channel main body 600 of the pull out head.

In an embodiment of the present invention, the pipe-in-pipe fast installation structure further includes: a second tight seal ring slot 330, disposed on the connector 300; and a second tight seal ring 340, disposed in the second tight seal ring slot 330, to tightly seal an outer interface 620 for a water channel main body 600 of a pull out head.

In an embodiment of the present invention, the pipe-in-pipe fast installation structure further includes: two tight seal protrusion ring portions 210, disposed at an end of the pliable inner pipe 200, to tightly seal an inner interface 610 for a water channel main body 600 of a pull out head.

The installation of the pipe-in-pipe fast installation structure can be realized in the following steps: (1) firstly, connecting the outer pipe 100 with one end of the pliable tube connector 400 through riveting; (2) next, after riveting, putting onto it the connection sleeve 500; (3) then, connecting the connector 300 with the other end of the pliable tube connector 400 threading; (4) subsequently, putting the pliable inner pipe 200 to penetrate through the outer pipe 10, and then extending it out from the connector 300; and then, fastening the pliable inner pipe 200 into the C ring 310 of the connector 300 by making use of its pliability, in achieving convenient installation and secure connection; and (5) finally, connecting the assembled pipe-in-pipe fast installation structure with a water input end of the pull out head through threading.

The above detailed description of the preferred embodiment is intended to describe more clearly the characteristics and spirit of the present invention. However, the preferred embodiments disclosed above are not intended to be any restrictions to the scope of the present invention. Conversely, its purpose is to include the various changes and equivalent arrangements which are within the scope of the appended claims.

## Claims

1. A pipe-in-pipe fast installation structure, comprising:
an outer pipe;
a pliable inner pipe, disposed in the outer pipe;
a connector, connected to the outer pipe; and
a C ring, formed integrally with an end of the connector,
wherein the pliable inner pipe penetrates through the outer pipe to extend out from the connector, while an end of the pliable inner pipe is fastened into the C ring.

2. The pipe-in-pipe fast installation structure as claimed in claim 1, further comprising:
a pliable tube connector, through which the connector is connected to the outer pipe.

3. The pipe-in-pipe fast installation structure as claimed in claim 2, further comprising:
a positioning ring, disposed around the pliable tube connector, to act in cooperation with an end face of the outer pipe, one end of the pliable tube connector is connected to the outer pipe through riveting, while its other end is connected to the connector through threading.

4. The pipe-in-pipe fast installation structure as claimed in claim 3, further comprising:
a movable connection sleeve, sleeved around an end of the outer pipe; and
a blocking ring, disposed around the connector, to prevent the movable connection sleeve from detaching from the outer pipe.

5. The pipe-in-pipe fast installation structure as claimed in claim 4, further comprising:
a first tight seal ring slot, disposed on the pliable tube connector; and
a first tight seal ring, disposed in the first tight seal ring slot, to form tight seal contact with the connector.

6. The pipe-in-pipe fast installation structure as claimed in claim 5, further comprising:
a second tight seal ring slot, disposed on the connector; and
a second tight seal ring, disposed in the second tight seal ring slot, to tightly seal an outer interface for a water channel main body of a pull out head.

7. The pipe-in-pipe fast installation structure as claimed in claim 1, further comprising:
at least a tight seal protrusion ring portion, disposed at an end of the pliable inner pipe, to tightly seal an inner interface for the water channel main body of the pull out head.
